# EUROPEAN PATENT SPECIFICATION

(11) **EP 3 493 093 B1**
(45) Date of publication and mention of the grant of the patent: **06.04.2022**
(21) Application number: 17204367.1
(22) Date of filing: 29.11.2017
(51) Int. Cl.: G06F 40/166, G06F 21/62

(54) **DATA PROTECTION METHOD FOR PREVENTING OF RE-PASTING OF CONFIDENTIAL DATA**
DATENSCHUTZVERFAHREN ZUR VERMEIDUNG DES ERNEUTEN EINFÜGENS VERTRAULICHER DATEN
PROCÉDÉ DE PROTECTION DE DONNÉES POUR EMPÊCHER DE COLLER À NOUVEAU DES DONNÉES CONFIDENTIELLES

(43) Date of publication of application: 05.06.2019
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Kehl, Ascherl, Liebhoff & Ettmayr Patentanwälte Partnerschaft mbB

(56) References cited:
- US-A1- 2014 304 839
- US-A1- 2015 161 483
- US-A1- 2017 154 188
- Anonymous: "How Does Secure Socket Layer (SSL or TLS) Work?", , 22 July 2013 (2013-07-22), pages 1-12, XP055742180, Retrieved from the Internet: URL:https://luxsci.com/blog/how-does-secur e-socket-layer-ssl-or-tls-work.html [retrieved on 2020-10-21]

## Description

The present invention refers according to claims 1 and 7 to methods for protecting data and according to claim 10 to a computer program product for executing such a method.

### Background of the invention

Document US5115508 discloses an information protective device that protects stored information such as a program, data or the like in an information processing apparatus such as small type of portable computer or the like. The information protective device comprises a prohibition condition storing portion, which stores the writing prohibition condition to a storage unit for programs, data or the like, and a prohibition condition setting means, which carries out the writing of prohibition instructions to be stored in the storing portion to set the writing prohibition condition, so that the storage unit may be handled like so-called read only memory (ROM), whereby the storing contents may be protected more positively.

Document US2014304839A1 discloses a clipboard in an electronic system. The clipboard protects sensitive data by copying data into a clipboard of an electronic system as an entry and selectively blocking access to the sensitive data. An entry protect status is associated with a clipboard entry that is arranged to store copied data that is sensitive. The entry protect status is changed to indicate the entry protect status is set to block access to the copied data. Access to the copied data for which the entry protect status has been changed is selectively blocked.

Document US8656461 discloses a system. Said system comprises a copy logic configured to determine source content from a source application, wherein the source content includes a plurality of source content portions, wherein each source content portion has an associated source trust level, the copy logic further configured to store the source content in a memory, wherein the source application operates in a managed code environment; a computing device comprising comparison logic configured to make a trust determination responsive to a paste request, the trust determination based on the source trust level and a target trust level associated with a target application, the computing device further comprising the memory; and the computing device further comprising paste logic configured to determine, based on the trust determination, a first source content portion of the plurality of source content portions to provide to the target application and a second source content portion of the plurality of source content portions to block from the target application based on a determination that the second source content portion comprises an active code object and the target application is external to the managed code environment, wherein the trust determination indicates that the second source content portion is not safe for providing to the target application, and the paste logic is configured to override the trust determination and provide the second source content portion of the source content to the target application, wherein the copy logic is implemented at least in part in association with the comparison logic and separately from the source application, and is configured to determine the source content and source trust level from a memory associated with the source application.

Document US8656461 discloses a method that if paste information is secure information, than it allows to just paste to same security level. For example, it does not allow to paste credit card number to IM accidentally. But it allows to paste information to a secure payment system. However, the confidential information can still be paste by third parties in case the computer is unattended.

### Object of the invention

It is the object of the invention to provide a method that improved protection of confidential data, in particularly in case that a computer is used by multiple persons.

### Description of the invention

The before mentioned object is solved by a method for protecting data respectively a data protection method. Said method preferably comprises at least the steps: Selecting data in a first location of a screen, copying the selected data to a memory, determining if the selected or copied data represents confidential information, setting a flag to mark the copied data in that memory as confidential data in case it is determined that the copied data represents confidential information, pasting the copied data into a second location of the screen, and deleting the copied data and preferably also the flag from the memory.

This solution is beneficial since it is preferably automatically detected if the selected and copied data is confidential data respectively data that should be protected, like credit card number or password or login, and preferably automatically deleted from a memory of a computing device, in particularly a pc, mobile, or tablet pc. Thus, in case different persons are using the same computing device, the second person cannot access confidential data anymore which was copied to a memory of the device by the first person, since such confidential data was preferably provided with a flag and therefore deleted.

Further preferred embodiments are subject-matter of the dependent claims and/or of the following specification passages.

According to a preferred embodiment of the present invention it is determined that the selected or copied data represents confidential information in case the data is selected from a predefined selection field and/or has a predefined structure and/or has a predefined length and/or is pasted to a predefined paste filed. This embodiment is beneficial since multiple parameters can be detected or analyzed or read out to determine if the selected and/or copied data is confidential. It is also possible to combine two or more than two of said parameters.

The predefined structure comprises according to a further preferred embodiment of the present invention at least 4 or 6 or 8 or 10 or up to 20 or up to 50 characters, wherein the predefined structure comprises at least two or three or up to three or four or up to four features of the following list: at least one character is a number, at least one character is a special symbol, at least one character is a capital letter and/or at least one character is a small letter. This embodiment is beneficial since the resulting password has a predefined structure and is therefore detectable in a very reliable manner.

The predefined paste field is according to a further preferred embodiment of the present invention a field linked to a validation means and identified as such a field. This embodiment is beneficial since, e.g. a website or an application provides information about the respective input fields. Thus, the predefined paste field preferably has a structure defined by a markup language, in particular HTML or XML.

It is according to a further preferred embodiment of the present invention determined that the selected or copied data represents confidential information in case the data representing content which is displayed while the predefined selection field or the predefined past field is displayed is analyzed by an analyzing means, in particular an OCR means, wherein the analyzing means comprises a database or is linked to a database, wherein the analyzing means compares the content with data of the database, wherein the database comprises predefined data representing images and/or words which are defined to represent confidential subject-matter, and the data of the database matches with the analyzed data.

The above mentioned object is also solved by a method for protecting data according to claim 8. Said method preferably comprises at least the steps: Selecting data, in particularly in a first location of a screen, copying the selected data to a memory, determining if the selected or copied data represents confidential information, pasting the copied data, in particularly into a second location of the screen, and deleting the copied data from the memory, in case an encrypted data transfer is started or executed within a predefined time after pasting the copied data, in particular after entering or registering the pasted data, or in case data which is representing content which is displayed after the copied data is pasted and registered is analyzed by an analyzing means, in particular an OCR means, wherein the analyzing means comprises a database or is linked to a database, wherein the analyzing means compares the content with data of the database, wherein the database comprises predefined data representing images and/or words which are defined to represent confidential subject-matter, wherein the analyzed data matches with data of the database. The predefined time is up to or more than 0,1 second or up to or more than 1 second or up to or more than 5 seconds or up to or more than 10 seconds. This embodiment is beneficial since in the triggered process provides the information about the type of selected, copied and paste data. Thus, the required computing power for carrying out the detection is very low.

The selected and copied data represents according to a further preferred embodiment of the present invention a password and/or a code. This embodiment is beneficial since passwords and codes are often used in multiple fields and therefore often stored in memory during a selecting, copying and pasting process.

According to another embodiment of the present invention, the memory and the screen are parts of the same device, in particularly a smart phone, smart watch, tablet pc or notebook. The memory is preferably a working memory. The device further preferably comprises a processor and/or a battery and/or a communication means, like WLAN, Bluetooth and/or GSM.

The above mentioned object is also solved by a computer program product according to claim 10 for executing a method according to any of the preceding claims.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figures. In the following the invention is just exemplarily described with respect to the attached figures. The invention is defined by the appended claims.

### Brief description of the drawings

Fig. 1 shows an example of a general working principle of the present invention and
Fig. 2 shows a flowchart exemplarily representing the steps of the present invention.

### Detailed description of the drawings

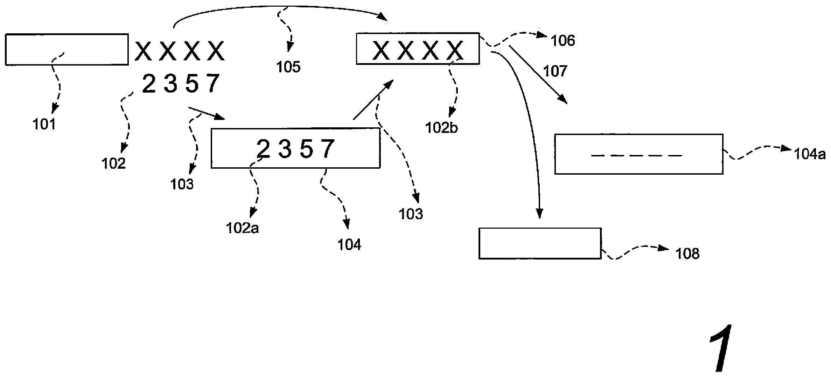

In figure 1 reference number 101 represents a password / passcode / key original source, which provides the Password / Passcode / Key 102. The Password /Passcode / Key 102 is during "copy" operation 103 or "select" operation stored in memory 104. Reference number 102a represents the Password / Passcode / Key stored in memory 104. Reference number 102b represents the Password / Passcode I Key after paste, in particularly in another input field, in particularly of a website or an application.

The memory 104 is cleared/deleted/erased according to reference number 104a. Reference number 105 indicates a "paste" operation, that means inserting of the copied data into a past area 106, in particularly a mask or field or section. Reference number 107 indicates the step of clearing/deleting/erasing the memory 104 hence 104a results. Since the memory is cleared the initially copied data cannot be pasted anymore.

However, it is further or alternatively possible that a flag is set in case the Password / Passcode / Key is considered confidential respectively to be protected. Thus, a step of determining the status of the Password / Passcode / Key can be executed, in particularly before pasting the copied data.

Thus, the present invention provides a safe paste area, where safety critical information is paste memory is deleted after paste or system automatically detects safety critical paste and delete data after paste.

The system first detects whether copied area or information is security critical for example passcode or similar when it is detected, information is copied to memory, in particularly with a security flag. When it is paste to any other place, the flag is cleared, if any is set, and also memory is cleared, so that it is not possible to paste information again.

Thus, the method according to the present invention preferably comprises multiple of the following steps: Copy information/text; detect whether info is safety critical or not; if yes set flag related to memory address; paste information/data; if flag is set then clear both data and flag.

Security critical areas can be detected in various ways for example one way is if copied information is between common password lengths and common password words. Another easier method if password copied to a passcode box, which is known by HTML, XML or similar.

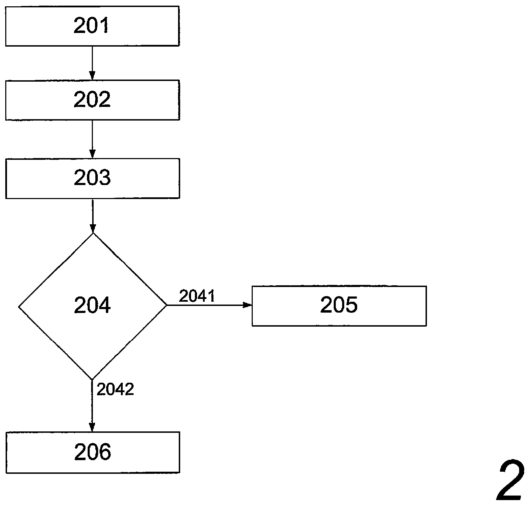

Fig. 2 shows an example of a flowchart according to the present invention. Reference number indicates a step of "copying" data. A "paste" step or operation is indicated by reference number 202. It is hereby detected in step 203 whether this paste operation is done with security critical info. In case the "paste" area is security critical ("yes" - reference number 2014), in particularly representing a field for inserting a credit number or a field for inserting a password, the data stored in memory is deleted/erased/cleared according to step 205. In case the "paste" area is not (reference number 2042) security critical the data stored in the memory is not erased/deleted/cleared immediately (it is kept in memory).

Therefore, the present invention refers to a method for protecting data. The inventive method preferably comprises at least the steps: Selecting data in a first location of a screen, Copying (201) the selected data to a memory, determining (203) if the selected or copied data represents confidential information, pasting (202) the copied data into a second location of the screen, and deleting (205) the copied data and the flag from the memory.

The present invention preferably comprises the further features setting a flag to mark the copied data in that memory as confidential data in case it is determined that the copied data represents confidential information and deleting (205) the flag from the memory after pasting the copied data.

### Reference numbers:

- 101: Password / Passcode / Key original source
- 102: Password / Passcode / Key
- 102a: Password / Passcode / Key stored in memory
- 102b: Password / Passcode / Key after paste
- 103: During "Copy" operation stored in memory
- 104: Memory
- 104a: Memory is cleared/deleted
- 105: "Paste" operation
- 106: "Paste" area
- 107: Memory clear/delete
- 108: No more paste
- 201: "Copy" operation
- 202: "Paste" operation
- 203: Detect whether this paste operation done with security critical info
- 204: Is "Paste" area security critical
- 2041: Yes
- 2042: No
- 205: Delete/clear memory
- 206: Keep memory

## Claims

1. Method for protecting data, at least comprising the steps:
Selecting data in a first location of a screen,
Copying (201) the selected data to a memory,
Determining (203) if the selected or copied data represents confidential information,
Setting a flag to mark the copied data in that memory as confidential data in case it is determined that the copied data represents confidential information,
Pasting (202) the copied data into a second location of the screen, and
Deleting (205) the copied data and the flag from the memory in case an encrypted data transfer is started within a predefined time after pasting the copied data.

2. Method according to claim 1, wherein it is determined that the selected or copied data represents confidential information in case the data is selected from a predefined selection field and/or has a predefined structure and/or has a predefined length and/or is pasted to a predefined paste filed.

3. Method according to claim 2, wherein, when the data has the predefined structure, the predefined structure comprises at least 6 or 8 characters, wherein the predefined structure comprises at least two of the features of the following list: at least one character is a number, at least one character is a special symbol, at least one character is a capital letter and/or at least one character is a small letter.

4. Method according to claim 2, wherein, when the data is pasted to the predefined paste field, the predefined paste field is a field linked to a validation means and identified as such a field

5. Method according to claim 4, wherein the predefined paste field has a structure defined by a markup language, in particular HTML or XML.

6. Method according to claim 1, wherein it is determined that the selected or copied data represents confidential information in case the data representing content which is displayed while the predefined selection field or the predefined paste past field are displayed is analyzed by an analyzing means, in particular an OCR means,
wherein the analyzing means comprises a database or is linked to a database,
wherein the analyzing means compares the content with data of the database,
wherein the database comprises predefined data representing images and/or words which are defined to represent confidential subject-matter, and the data of the database matches with the analyzed data.

7. Method for protecting data, at least comprising the steps:
Selecting data in a first location of a screen, Copying (201) the selected data to a memory,
Determining if the selected or copied data represents confidential information, Pasting (202) the copied data into a second location of the screen, and
Deleting (205) the copied data from the memory, in case an encrypted data transfer is started within a predefined time after pasting the copied data.

8. Method according to any of the preceding claims, wherein the selected and copied data represents a password and/or a code.

9. Method according to any of the preceding claims, wherein the memory (104) and the screen are parts of the same device, in particularly a smart phone, smart watch, tablet pc or notebook.

10. Method according to any of the preceding claims, wherein the predefined time is more than 1 second or more than 10 seconds.

11. Computer program product for executing a method according to any of the preceding claims.

## Patentansprüche

1. Verfahren zum Schutz von Daten,
mindestens umfassend die folgenden Schritte:
Auswahl von Daten an einer ersten Stelle eines Bildschirms,
Kopieren (201) der ausgewählten Daten in einen Speicher,
Feststellung (203), ob die ausgewählten oder kopierten Daten vertrauliche Informationen darstellen,
Setzen eines Kennzeichens, um die kopierten Daten in diesem Speicher als vertrauliche Daten zu kennzeichnen, falls festgestellt wird, dass die kopierten Daten vertrauliche Informationen darstellen,
Einfügen (202) der kopierten Daten an einer zweiten Stelle des Bildschirms, und
Löschen (205) der kopierten Daten und des Kennzeichens aus dem Speicher, wenn eine verschlüsselte Datenübertragung innerhalb einer vordefinierten Zeit nach dem Einfügen der kopierten Daten gestartet wird.

2. Verfahren nach Anspruch 1,
wobei
es festgestellt wird, dass die ausgewählten oder kopierten Daten vertrauliche Informationen darstellen, wenn die Daten aus einem vordefinierten Auswahlfeld ausgewählt werden und/oder eine vordefinierte Struktur aufweisen und/oder eine vordefinierte Länge haben und/oder in ein vordefiniertes Einfügefeld eingefügt werden.

3. Verfahren nach Anspruch 2,
wobei, wenn die Daten die vordefinierte Struktur aufweisen, die vordefinierte Struktur mindestens 6 oder 8 Zeichen umfasst, wobei die vordefinierte Struktur mindestens zwei der Merkmale der folgenden Liste umfasst: mindestens ein Zeichen ist eine Zahl, mindestens ein Zeichen ist ein Sonderzeichen, mindestens ein Zeichen ist ein Großbuchstabe und/oder mindestens ein Zeichen ist ein Kleinbuchstabe.

4. Verfahren nach Anspruch 2,
wobei, wenn die Daten in das vordefinierte Einfügefeld eingefügt werden, das vordefinierte Einfügefeld ein Feld ist, das mit einem Überprüfungsmittel verbunden und als ein solches Feld identifiziert ist.

5. Verfahren nach Anspruch 4,
wobei das vordefinierte Einfügefeld eine durch eine Auszeichnungssprache, insbesondere HTML oder XML, definierte Struktur aufweist.

6. Verfahren nach Anspruch 1,
wobei festgestellt wird, dass die ausgewählten oder kopierten Daten vertrauliche Informationen darstellen, wenn die Daten, die den Inhalt darstellen, der angezeigt wird, während das vordefinierte Auswahlfeld oder das vordefinierte Einfügefeld angezeigt werden, durch ein Analysemittel, insbesondere ein OCR-Mittel, analysiert werden,
wobei das Analysemittel eine Datenbank umfasst oder mit einer Datenbank verbunden ist,
wobei das Analysemittel den Inhalt mit Daten aus der Datenbank vergleicht,
wobei die Datenbank vordefinierte Daten enthält, die Bilder und/oder Wörter repräsentieren, die zur Darstellung von vertraulichen Gegenständen definiert sind,
und die Daten der Datenbank mit den analysierten Daten übereinstimmen.

7. Verfahren zum Schutz von Daten,
mindestens umfassend die folgenden Schritte:
Auswahl von Daten an einer ersten Stelle eines Bildschirms,
Kopieren (201) der ausgewählten Daten in einen Speicher,
Feststellung, ob die ausgewählten oder kopierten Daten vertrauliche Informationen darstellen,
Einfügen (202) der kopierten Daten an einer zweiten Stelle des Bildschirms, und
Löschung (205) der kopierten Daten aus dem Speicher,
für den Fall, dass eine verschlüsselte Datenübertragung innerhalb einer vordefinierten Zeit nach dem Einfügen der kopierten Daten gestartet wird.

8. Verfahren nach einem der vorhergehenden Ansprüche,
wobei die ausgewählten und kopierten Daten ein Passwort und/oder einen Code darstellen.

9. Verfahren nach einem der vorhergehenden Ansprüche,
wobei der Speicher (104) und der Bildschirm Teil desselben Geräts sind, insbesondere eines Smartphones, einer Smartwatch, eines Tablet-PCs oder eines Notebooks.

10. Verfahren nach einem der vorhergehenden Ansprüche,
wobei die vordefinierte Zeit mehr als 1 Sekunde oder mehr als 10 Sekunden beträgt.

11. Computerprogrammprodukt zum Ausführen eines Verfahrens nach einem der vorhergehenden Ansprüche.

## Revendications

1. Méthode pour protéger des données,
comprenant au moins les étapes suivantes :
Sélectionner des données dans un premier emplacement d'un écran,
Copier (201) les données sélectionnées dans une mémoire,
Déterminer (203) si les données sélectionnées ou copiées représentent des informations confidentielles,
Mise en place d'un drapeau pour marquer les données copiées dans cette mémoire comme des données confidentielles dans le cas où il est déterminé que les données copiées représentent des informations confidentielles,
coller (202) les données copiées dans un deuxième emplacement de l'écran, et
effacer (205) les données copiées et l'indicateur de la mémoire dans le cas où un transfert de données cryptées est lancé dans un délai prédéfini après le collage des données copiées.

2. Méthode selon la revendication 1,
dans lequel
il est déterminé que les données sélectionnées ou copiées représentent des informations confidentielles dans le cas où les données sont sélectionnées dans un champ de sélection prédéfini et/ou ont une structure prédéfinie et/ou ont une longueur prédéfinie et/ou sont collées dans un fichier de collage prédéfini.

3. Méthode selon la revendication 2,
dans lequel, lorsque les données ont la structure prédéfinie, la structure prédéfinie comprend au moins 6 ou 8 caractères, dans lequel la structure prédéfinie comprend au moins deux des caractéristiques de la liste suivante : au moins un caractère est un chiffre, au moins un caractère est un symbole spécial, au moins un caractère est une majuscule et/ou au moins un caractère est une minuscule.

4. Méthode selon la revendication 2,
dans lequel, lorsque les données sont collées dans le champ de collage prédéfini, le champ de collage prédéfini est un champ lié à un moyen de validation et identifié comme tel.

5. Méthode selon la revendication 4,
dans lequel le champ de collage prédéfini a une structure définie par un langage de balisage, notamment HTML ou XML.

6. Méthode selon la revendication 1,
dans lequel il est déterminé que les données sélectionnées ou copiées représentent des informations confidentielles dans le cas où les données représentant le contenu qui est affiché lorsque le champ de sélection prédéfini ou le champ de collage prédéfini sont affichés sont analysées par un moyen d'analyse, en particulier un moyen OCR,
dans lequel le moyen d'analyse comprend une base de données ou est lié à une base de données,
dans lequel le moyen d'analyse compare le contenu avec les données de la base de données,
dans lequel la base de données comprend des données prédéfinies représentant des images et/ou des mots qui sont définis pour représenter un sujet confidentiel,
et les données de la base de données correspondent aux données analysées.

7. Méthode de protection des données,
comprenant au moins les étapes suivantes
Sélectionner des données dans un premier emplacement d'un écran,
Copier (201) les données sélectionnées dans une mémoire,
Déterminer si les données sélectionnées ou copiées représentent des informations confidentielles,
coller (202) les données copiées dans un deuxième emplacement de l'écran, et
supprimer (205) les données copiées de la mémoire,
dans le cas où un transfert de données cryptées est lancé dans un délai prédéfini après le collage des données copiées.

8. Méthode selon l'une quelconque des revendications précédentes,
dans lequel les données sélectionnées et copiées représentent un mot de passe et/ou un code.

9. Méthode selon l'une quelconque des revendications précédentes,
dans lequel la mémoire (104) et l'écran font partie d'un même dispositif, notamment un téléphone intelligent, une montre intelligente, une tablette ou un ordinateur portable.

10. Méthode selon l'une quelconque des revendications précédentes,
dans lequel le temps prédéfini est supérieur à 1 seconde ou supérieur à 10 secondes.

11. Produit programme d'ordinateur pour l'exécution d'une méthode selon l'une quelconque des revendications précédentes.
